# EUROPEAN PATENT SPECIFICATION

(11) **EP 1 331 569 B1**
(45) Date of publication and mention of the grant of the patent: **20.02.2013**
(21) Application number: 01978981.7
(22) Date of filing: 31.10.2001
(51) Int. Cl.: H04L 29/08, H04L 29/06

(54) **ENTERTAINMENT SYSTEM FOR CONTROLLING DISTRIBUTION OF CONTENT**
UNTERHALTUNGSYSTEM MIT INHALTSVERTEILUNGSVERWALTUNG
SYSTEME RECREATIF AVEC GESTION DE LA DISTRIBUTION DE CONTENU

(30) Priority: 02.11.2000 JP 2000336551; 30.10.2001 JP 2001333463
(43) Date of publication of application: 30.07.2003
(73) Proprietor: Sony Computer Entertainment Inc., Tokyo 107-0052 (JP)
(72) Inventor: SHIMADA, Muneki, c/o SONY COMPUTER ENTERTAIN. INC., Tokyo 107-0052 (JP)
(74) Representative: Görz, Ingo
(86) International application number: PCT/JP2001/009559
(87) International publication number: WO 2002/037292

(56) References cited:
- EP-A- 0 762 686
- WO-A-00/40026
- JP-A- 8 036 555
- JP-A- 9 146 887
- JP-A- 10 198 610
- JP-A- 11 069 311
- JP-A- 2000 259 532
- US-A- 5 978 855
- US-A- 6 047 127
- HAFID A.: "A scalable video-on-demand system using future reservation of resources and multicast communications" COMPUTER COMMUNICATIONS, ELSEVIER SCIENCE PUBLISHERS BV, AMSTERDAM, NL, vol. 21, no. 5, May 1998 (1998-05), pages 431-444, XP004123937 ISSN: 0140-3664
- SUBRAMANYA S R: "Video containers: a system for the on-demand storage, delivery, and management of television programs" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, vol. 3, 30 July 2000 (2000-07-30), pages 1245-1249, XP010512732 ISBN: 0-7803-6536-4

## Description

### TECHNICAL FIELD

The present invention relates to an entertainment system and a server machine for distributing various contents such as video game, movie, news and music; a contents distributing method; a contents distributing program; and a storage medium having recorded therein the contents distributing program.

### BACKGROUND ART

Besides the conventional way of distributing contents such as music data or game programs and the like in a form of being stored in a storage medium such as CD-ROM, DVD-ROM and semiconductor memory, contents have been distributed in a manner of downloading using a personal computer of the user.

More specifically, for the case of downloading a desired content, the user makes an access from its own personal computer using a web browser stored therein to a predetermined server machine, and sends a request for distributing the desired content. The server machine then distributes the content requested by the user via a network to the personal computer of such user. On the side of the personal computer, the content distributed from the server machine is stored in a storage medium such as hard disk (HD). The user can thus obtain the desired content without using a storage medium such as CD-ROM or DVD-ROM.

It is, however, often seen on the day of launching a game content of a very popular game or music content of a musician in boom that a huge number of distribution requests from the users who want to obtain it rush to the server machine. Since the transmission band available for the content distribution is limited, the conventional content distribution has suffered from saturation of the network transmission band (network congestion) when the distribution requests are concentrated, which interferes smooth content distribution.

In Hafid A.: "A scalable video-on-demand system using future reservation of resources and multicast communications" COMPUTER COMMUNICATIONS, ELSEVIER SCIENCE PUBLISHERS BV, AMSTERDAM. NL, vol. 21, no.5, May 1998 (1998-05). Pages 431-44, SP004123937, ISSN: 0140-3664 a video-on-demand (VoD)system is disclosed, in which the user can select and play movies according to his/her own quality of service requirements. In this paper a scalable VoD (SVoD) system is proposed, which decouples the starting time of the service from the time the service request is made and requires that the duration of the requested service must be specified. In response to a user request, SVoD determines the quality of service with which the movie can be presented at the time the service request is made, and at certain later times carefully chosen. As an example if the requested quality of service cannot be supported at the time the service request is made, SVoD allows to compute the earliest time, when the user can play the movie with the desired quality of service.

In Subramanya S.R.: "Video containers: a system for the on-demand storage, delivery, and management of television programs" MULTIMEDIA AND EXPO, 2000. ICME 2000. 2000 IEEE INTERNATIONAL CONFERENCE ON NEW YORK, NY, USA 30 July - 2. Aug.2000, PISCATAWAY, NJ, USA, IEEE. US, vol. 3, 30 July 2000 (2000-07-30), pages 1245-1249, XP010512732 ISBN: 0-7803-6536-4 a system for the on-demand, on-line storage of user selected TV programs, and their subsequent management and delivery is disclosed. The system provides flexibility of customized viewing and recording of TV programs. The user is selecting a program to be stored, the broadcast is stored on a disk at a storage provider and it is delivered to the user at his request, taking into account resource availability.

WO 00/40026 discloses an automatic electronic programme scheduling system for providing a home entertainment device with a personal channel, the personal channel comprising a schedule of programmes and corresponding starting times, the programmes being selected from programmes available on a plurality of real channels and/or other programme sources.

The present invention was proposed to solve the foregoing problems, and an object of thereof resides in that providing an entertainment system, a server machine, a contents distributing method, a contents distributing program, and a storage medium having recorded therein the contents distributing method, all of which are aimed at preventing network congestion and ensuring smooth content distribution.

### DISCLOSURE OF THE INVENTION

To solve the foregoing problems, the present invention introduced a concept of "scheduled content distribution", which enables content distribution according to a content distribution schedule desired by the users or set on the convenience of the the server machine side, taking into account taking into account the distribution orders for the individual users determined based on user's priority.

In the present invention, the content distribution is proceeded according to the content distribution schedule, which is advantageous in that preventing the network congestion and ensuring smooth content distribution.

### BRIEF DESCRIPTION OF THE DRAWINGS

FIG. 1 is a block diagram of an entertainment system according to an embodiment of the present invention;
FIG. 2 is a block diagram of a domestic client terminal device composing the entertainment system;
FIG. 3 is a flow chart for explaining a schedule-governed downloading proceeds in the entertainment system;
FIG. 4 is a schematic drawing for explaining downloading of a content through a domestic client terminal device under a pull-type connection in the entertainment system;
FIG. 5 is a schematic drawing for explaining downloading of a content from a server machine under a push-type connection in the entertainment system;
FIG. 6 is a flow chart for explaining downloading of a content in the entertainment system, which is proceeded in response to congestion status of a network and a member level;
FIG. 7 is a drawing for explaining a recording/reproduction region of a hard disk provided to the domestic client terminal device in the entertainment system;
FIG. 8 is a drawing for explaining a data structure of an archived content downloaded into the domestic client terminal device;
FIGs. 9A to 9E are drawings for explaining write-in and decoding of the archived content downloaded into the domestic client terminal device;
FIG. 10 is a drawing for explaining a massage digest function value (MD) added to the archived content or a system program; and
FIG. 11 is a drawing for explaining content distribution based on the users' taste in the entertainment system.

### BEST MODE FOR CARRYING OUT THE INVENTION

### Constitution of Embodiment

### Entire System Constitution

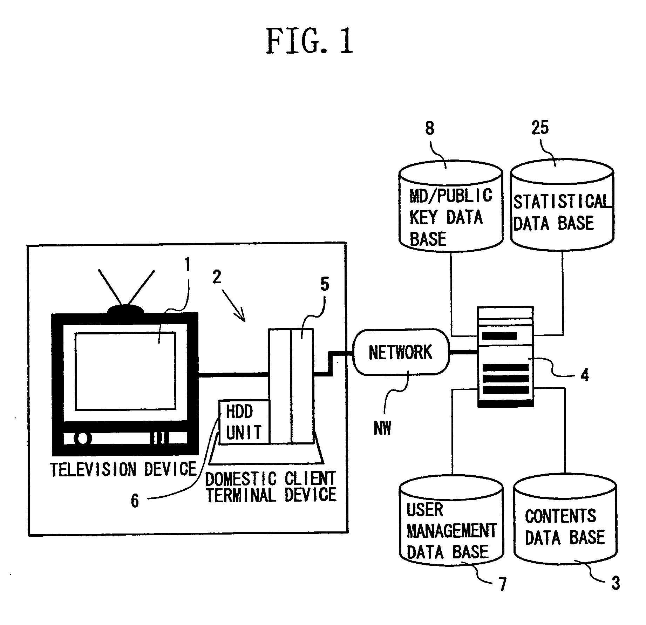

An entertainment system according to an embodiment of the present invention is composed of, as shown in FIG. 1, a domestic client terminal device 2 connected to a television image receiver 1 provided to each user' s home, and a server machine 4 provided with a contents database 3 storing various contents such as video game, movie, news and music; both of which are connected with each other via a network NW such as LAN (Local Area Network) including the Internet, internet protocol, cable internet, xDSL (x Digital Subscriber Line) and token ring, or WAN (Wide Area Network).

### Configuration of Domestic Client Terminal Device

The domestic client terminal device 2 comprises a main game unit 5 and a hard disk drive unit 6 (HDD unit).

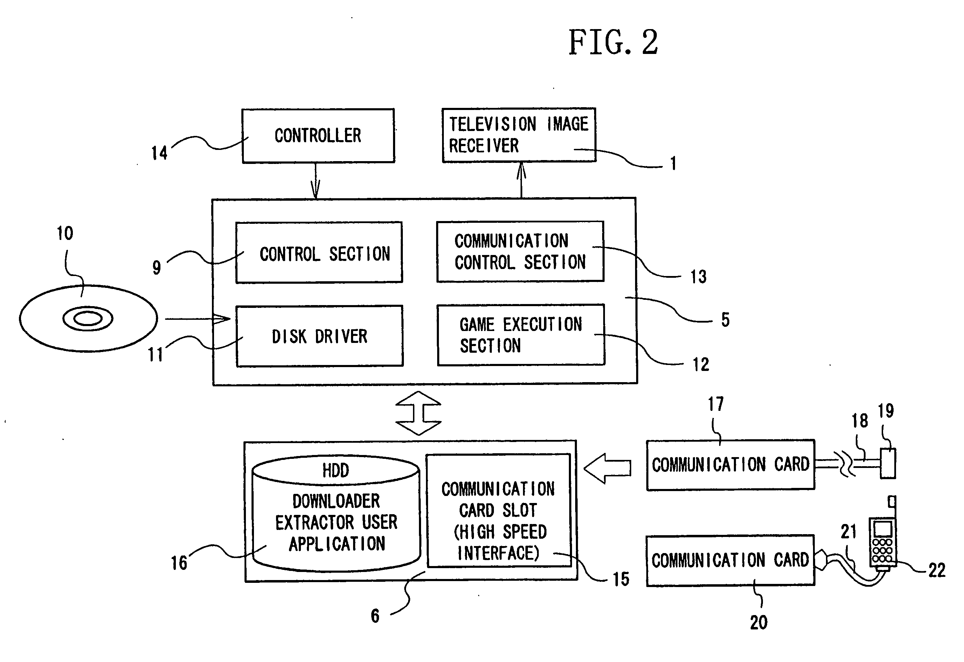

FIG. 2 is a block diagram showing a specific configuration of such main game unit 5 and the HDD unit 6. As is clear from FIG. 2, the main game unit 5 comprises a disk driver 11 for reproducing a program or data of a video game from a physical medium 10 such as a DVD-ROM or CD-ROM, a game execution section 12 for executing a video game based on the program or data of the video game reproduced by the disk driver 11, a communication control section 13 for controlling communication of various contents such as video game, movie, news and music, details of which will be described later, and a control section 9 for controlling the entire portion of the domestic client terminal device 2.

The game execution section 12 is provided for forming a game image of a video game in response to operation of a controller by the user and outputting such image to the television image receiver 1 to display, by parallel rendering engine.

The game execution section 12 is designed to reproduce sound of DVD video, CD and the like besides video game sound in order to provide such sound to a speaker unit of the television image receiver 1.

The communication control section 13 is provided for establishing a push-style or pull-style connection via the network NW to the server machine 4, to thereby control downloading of various contents into the HDD unit 6.

### Configuration of HDD Unit

The HDD unit 6 mainly comprises a hard disk drive 16 (HDD) having a capacity of as large as 30 GB or 60 GB and a communication card slot 15.

The HDD 16 stores system programs such as "downloader" and "extractor", and a predetermined user application program. The "downloader" is a program for downloading various contents by communicating with the server machine 4 on the network NW. The "extractor" is also a program for expanding the various contents downloaded in an archive format into a predetermined region of the HDD 16.

The communication card slot 15 is a high-speed interface allowing insertional connection of a communication card 17 for telephone line or a communication card 20 for mobile phone. The communication card 17 for telephone line can be connected to a telephone line provided for a user's home via a modular cable 18 and a modular jack 19, by which wire communication is established between the domestic client terminal device 2 and the server machine 4. The communication card 20 for mobile phone can be connected to a mobile phone 22 via a communication cable 21, by which wireless communication is established between the domestic client terminal device 2 and the server machine 4.

The entertainment system can support both of wire communication and wireless communication, and operations and effects thereof are similar in both communication modes except that the content is downloaded via wire or wireless manner. It should now be noted that the description below deals with the system based on the wire communication as a representative case.

### Operation of the Embodiment

### Downloading of Contents

The entertainment system is available, for example, after the user makes a monthly payment contract with a system administrator, always keeps the power switch ON even when a game is not played, and set the user's own domestic client terminal device 2 so as to be connected to the server machine 4 via the network NW using the communication card 17 for telephone line or the communication card 20 for mobile phone as shown in FIG. 2.

Such entertainment system allows downloading of various contents according to a schedule set by the user or set on the server side.

For the case that various contents are downloaded according to a schedule set on the server side, either downloading under so-called, pull-type connection or push-type connection is available, wherein the domestic client terminal device 2 accesses the server machine 4 in the former, and the server machine 4 accesses the domestic client terminal device 2 in the latter.

### Downloading Performed According to User-Set Schedule

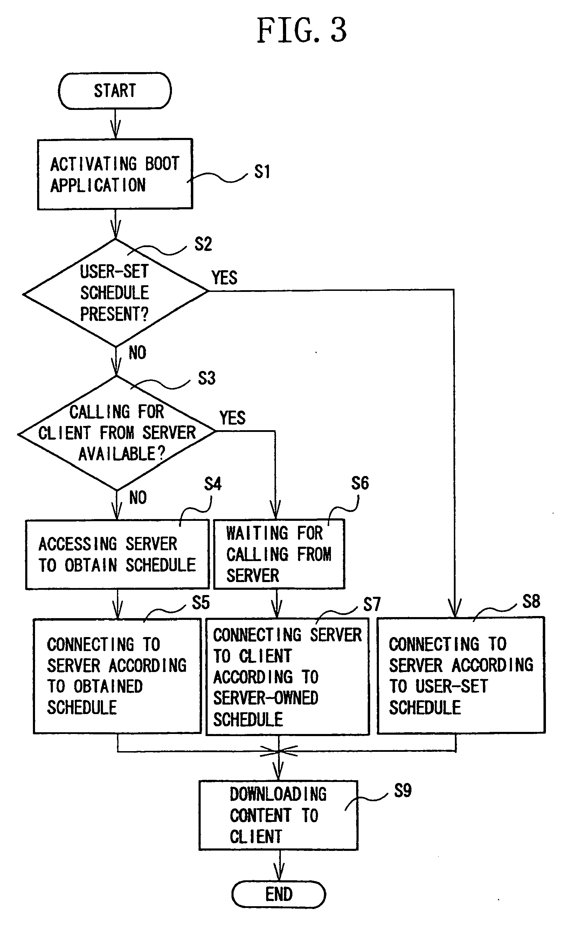

A flow chart in FIG. 3 shows a process flow of downloading under the individual connection styles, in which a flow along step S1 → step S2 → step S8 → step S9 indicates a process flow until the downloading is completed according to a user-set schedule.

The process flow shown in FIG. 3 starts when a main power source of the domestic client terminal device 2 is turned ON by the user, which is followed by a process in step S1. In step S1, the control section 9 shown in FIG. 2, when the main power source is turned ON, activates a boot application program stored in the HDD 16 of the HDD unit 6, and also activates "downloader" and "extractor", which is followed by a process in step S2.

In step S2, the control section 9 determines whether a schedule set by the user is present or not, and the process goes to step S8 if the schedule is present (YES), and goes to step S3 if absent (NO).

More specifically, when the user joins the system, the user will receive from the system administrator side a magazine or an e-mail which contains guide of contents to be distributed, and schedule of their distribution period or time. Observing such schedule, the user selects a desired content and enters using the controller 14 a desired date and time of downloading of such content. The control section 9 manages an identification of the content and the specified date and time of downloading as "a user-set schedule".

When the date and time set by the user come, the communication control section 13 makes, in step S8, the domestic client terminal device 2 access the server machine 4 based on the "downloader", and the process then goes to step S9. Thus in step S9, a content selected by the user will be downloaded according to a schedule set by such user at the time specified by such user.

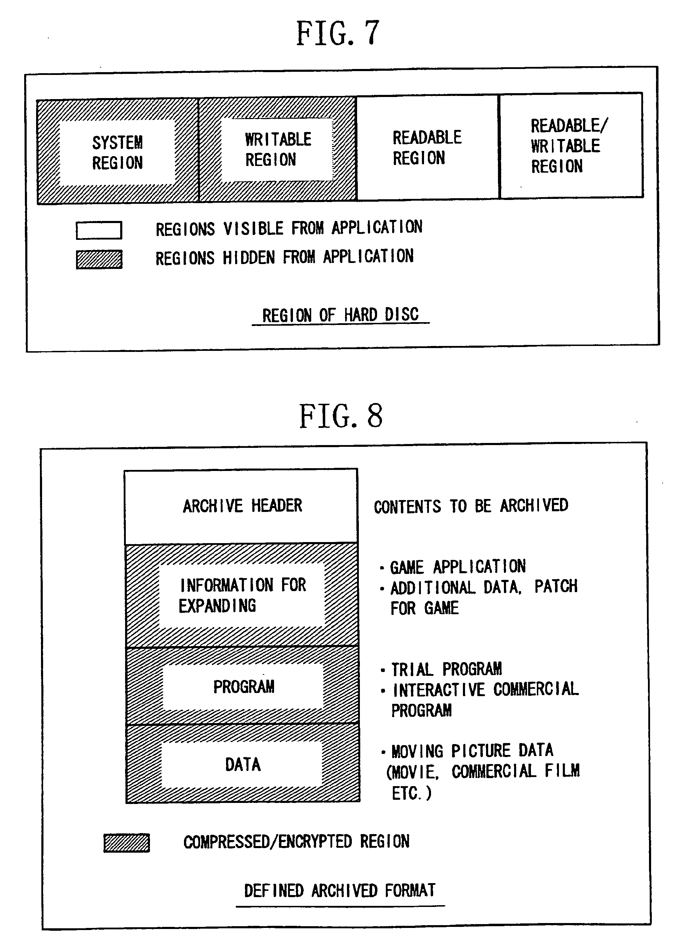

The downloaded content is supplied, under communication control by the communication control section 13, via the communication card 17 and the communication card slot 15 to the HDD 16, and is then stored under control of the control section 9 into a predetermined region (writable region in FIG. 7) of the HDD 16 described later.

### Downloading under Pull-Type Connection

Next, a process flow of downloading under the pull-type connection style according to a schedule set by the server machine 4 side will be described, in which the process flows as step S1 → step S2 → step S3 → step S9 → step S5 → step S9 in FIG. 3.

When it is determined in step S2 that the user-set schedule is absent, the process goes to step S3. In step S3, it is necessary to obtain a schedule according to which the domestic client terminal device 2 operates, so that the communication control section 13 discriminates whether the domestic client terminal device 2 is set in a state accessible by the server machine 4 (that is, whether the domestic client terminal device 2 is set so as to accept "push" from the server machine 4), and the process goes to step S6 if YES, or goes to step S4 if NO.

Setting of whether the "push" from the server machine 4 will be accepted or not can interactively be done as being guided by an interactive-type set screen on the television image receiver 1 through operating the controller 14, where either selection of "setting for accepting push from the server machine 4" or "setting for refusing push from the server machine 4, but allowing only pull-type connection to such server machine 4 from the domestic client terminal device 2" is optional.

For the case that the domestic client terminal device 2 has the "setting for accepting push from the server machine 4", the discrimination in step S3 will be YES and the process goes to step S6, and for the case that the domestic client terminal device 2 has the "setting for refusing push from the server machine 4, but allowing only pull-type connection to such server machine 4 from the domestic client terminal device 2", the discrimination in step S3 will be NO and the process goes to step S4.

In step S4, the communication control section 13 makes an access from the domestic client terminal device 2 to the server machine 4 based on the "downloader" since the domestic client terminal device 2 is set so as to refuse push from the server machine 4, and downloads a schedule file formed on the server machine 4 side into the HDD 16. The schedule file is not always common to all users but properly arranged for the individual clients depending on taste or desire of the users, details of which will be described later.

The communication control section 13 is so designed to make access to the server machine 4 in a periodical manner (polling), so that a latest schedule file can be downloaded into the HDD 16 for every access.

Next in step S5, the communication control section 13 makes an access to the server machine 4 at the time scheduled on the server machine 4 side according to the schedule file obtained in step S4, and the process goes to step S9. Thus in step S9, a content scheduled on the server machine 4 side will be downloaded into the HDD 16 at the time scheduled on the server machine 4 side.

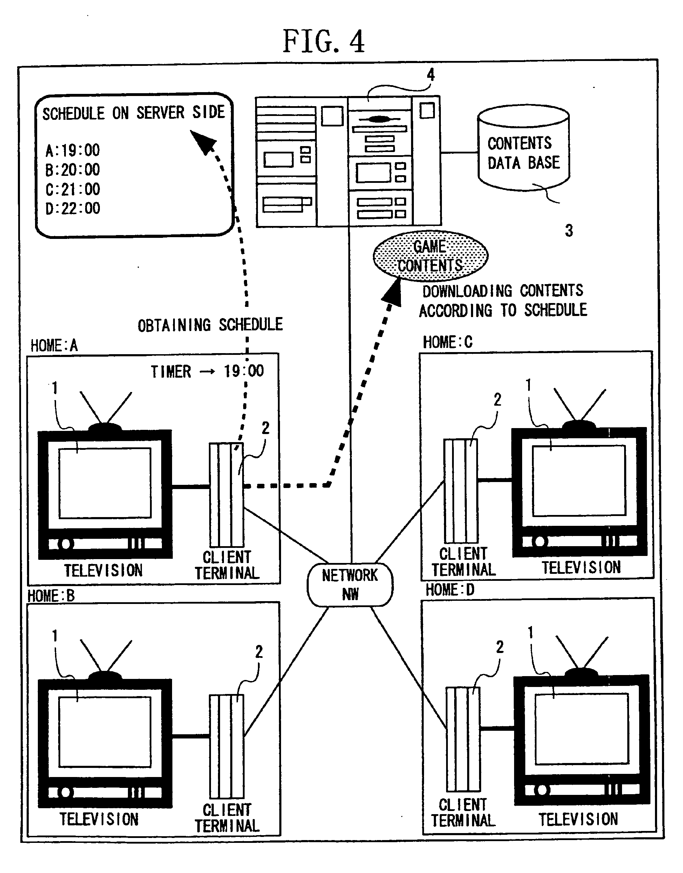

FIG. 4 is a schematic drawing showing the downloading of content under such pull-type connection. In such drawing showing an exemplary case of downloading a game content from the server machine 4, the individual domestic client terminal devices 2 at the individual users' homes A to D periodically make access to the server machine 4 to thereby download schedules determined on such server machine 4 side.

In this exemplary case, allowable downloading time is assigned to each of the users' homes A to D, such as for example 19:00 for user's home A, 20:00 for user's home B, 21:00 for user's home C and 22:00 for user's home D.

Thus the domestic client terminal device 2 at user's home A makes an access to the server machine 4 at 19:00, by which a predetermined game content is downloaded from such server machine 4 to the domestic client terminal device 2 at user's home A.

Similarly, the individual domestic client terminal devices 2 at users' homes B, C and D make access to the server machine 4 at 20:00, 21:00 and 22:00, respectively, by which predetermined game contents are downloaded from such server machine 4 to the individual domestic client terminals 2 at users' homes B, C and D, in a time differential manner.

The downloaded content is supplied, under communication control by the communication control section 13, via the communication card 17 and the communication card slot 15 to the HDD 16, and is then stored under control of the control section 9 into a predetermined region (writable region in FIG. 7) of the HDD 16 described later.

While the downloading time is adjusted for every user's homes A, B, C and D in the above exemplary case, it is also allowable that the downloading time is adjusted for every district.

A network has only a limited traffic and the downloading may be disabled due to low communication speed or over-capacity of the communication line if a huge number of users make accesses to the server machine 4 at a time to request downloading of desired contents. The assignment of the downloading time for the individual users (or the individual districts) and the adjustment of the downloading in a time differential manner as described in the above allow an effective use of the limitative traffic of the network and can ensure smooth downloading of desired contents.

### Downloading Under Push-type Connection

A process flow along step S1 → step S2 → step S3 → step S6 → step S7 → step S9 in FIG. 3 indicates a process flow until the downloading under the push-type connection is completed according to a schedule set on the server machine 4 side.

When it is determined in step S2 that the user-set schedule is absent, and is then further determined in step S3 that the domestic client terminal device 2 is set so as to accept "push" from the server machine 4, the process goes to step S6.

In step S6, the communication control section 13 goes into a wait calling status since the domestic client terminal device 2 is set so as to accept "push" from the server machine 4, and the process goes to step S7 upon receiving calling from the server machine 4.

In step S7, the server machine 4 makes accesses in a time differential manner to the individual domestic client terminal devices 2 according to the schedules assigned for the individual users, and the process goes to step S9. The individual domestic client terminal devices 2 are set so as to accept connection request from the server machine 4 according to the "downloader", and download into the HDD 16 in step S9, upon establishing the connection, content distributed at the time scheduled on the server machine 4 side.

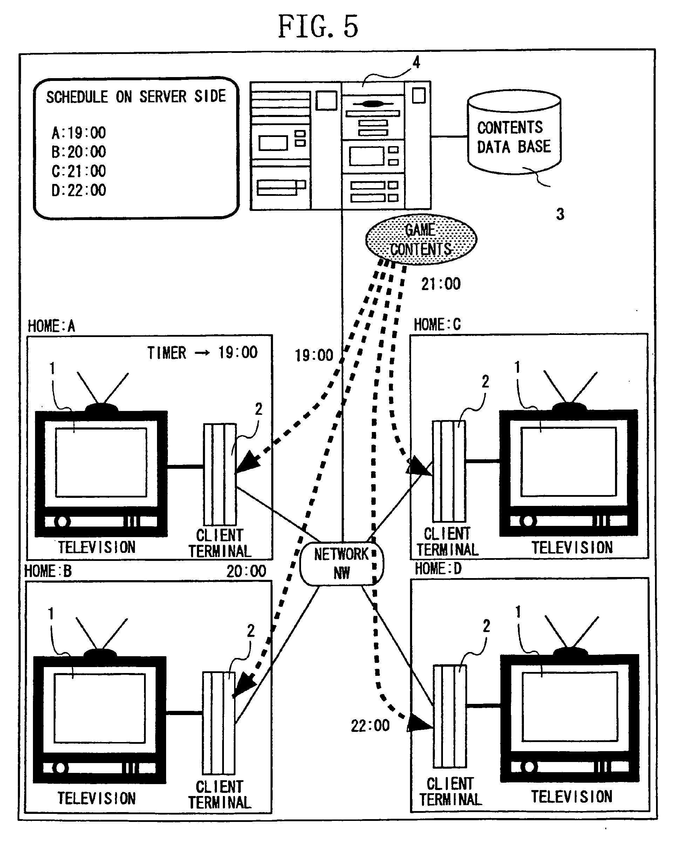

FIG. 5 is a schematic drawing showing the content distribution under the push-type connection. FIG. 5 shows an exemplary case in which a game content is distributed from the server machine 4, where distributing time is assigned to each of the users' homes A to D, such as for example 19:00 for user's home A, 20:00 for user's home B, 21:00 for user's home C and 22:00 for user's home D.

Thus the server machine 4 makes an access to the domestic client terminal device 2 at user's home A at 19:00, by which a predetermined game content is downloaded from such server machine 4 to the domestic client terminal device 2 at user's home A.

Similarly, the server machine 4 makes accesses to the individual domestic client terminal devices 2 at users' homes B, C and D at 20:00, 21:00 and 22:00, respectively, by which predetermined game contents are downloaded from such server machine 4 to the individual domestic client terminals 2 at users' homes B, C and D in a time differential manner.

The downloaded content is supplied, under communication control by the communication control section 13, via the communication card 17 and the communication card slot 15 to the HDD 16, and is then stored under control of the control section 9 into a predetermined region (writable region in FIG. 7) of the HDD 16 described later.

While the downloading time is adjusted for every user's homes A, B, C and D in the above exemplary case, it is also allowable that the downloading time is adjusted for every district.

In the case of the foregoing downloading under the pull-type connection, it was necessary to previously obtain on the domestic client terminal device 2 side a schedule on the server machine 4 side. On the other hand the downloading under such push-type connection does not require previous obtainment of the schedule or schedule management on the domestic client terminal device 2 side because the schedule management is conducted on the server machine 4 side and such server machine 4 makes access to a predetermined domestic client terminal device 2 to thereby distribute the content when the specified time comes.

This also allows an effective use of the limitative traffic of the network and can thus ensure smooth downloading of desired contents since the distribution times are assigned for the individual users (or the individual districts) and the contents are distributed in a time differential manner.

### Distribution Adjustment for Schedule File and Contents

In such entertainment system of this embodiment capable of distributing the schedule file and contents in a time differential manner, the server machine 4 is designed to adjust the distribution time depending on the congestion status of the network and the member level of the users.

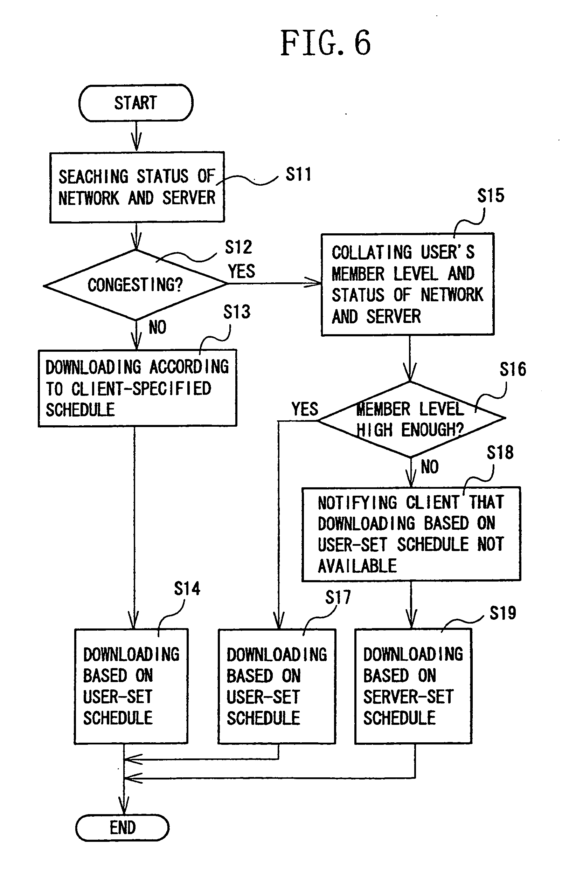

A flow chart in FIG. 6 shows a process flow of downloading the schedule file and the contents from the server machine 4 to the domestic client terminal device 2 depending on the congestion status of the network and the member level of the users, in which a flow along step S11 → step S12 → step S13 → step S14 indicates a process flow of downloading when the network capacity is still available.

The process of the flow chart of FIG. 6 starts in the cases described below, which is followed by the process in step S11:
1) a user-set schedule was discriminated as present in step S2 in FIG. 3, and an access was made in step S8 from the domestic client terminal device 2 to the server machine 4 according to the user-set schedule, so that the server machine 4 is ready to distribute the content in response to such access;
2) a user-set schedule was discriminated as absent in step S2 in FIG. 3, the domestic client terminal device 2 is discriminated in step S3 as being set to refuse push from the server machine 4, and an access was made in step S4 from the domestic client terminal device 2 to the server machine 4, so that the server machine 4 is ready to distribute a schedule file in response to such access;
3) a user-set schedule was discriminated as absent in step S2 in FIG. 3, the domestic client terminal device 2 is discriminated in step S3 as being set to refuse push from the server machine 4, and an access was made in step S5 to the server machine 4 according to the schedule file obtained in step S4, so that the server machine 4 is ready to distribute the content in response to such access; and
4) a user-set schedule was discriminated as absent in step S2 in FIG. 3, the domestic client terminal device 2 is discriminated in step S3 as being set to accept push from the server machine 4, and an access request issued from the server machine 4 is accepted by the domestic client terminal device 2 in steps S6 and S7, so that the server machine 4 is ready to distribute the content in response to such access.

In step S11, the server machine 4 first researches the current congestion status of the network servers, which is followed by the process in step S12.

In step S12, the server machine 4 determines based on the current congestion status researched in step S11 whether the network is currently congested or not, where the process goes to step S13 or S14 when the network is not congested (in the case of NO), and goes to step S15 when congested (in the case of YES).

Step S13 will be reached for the case that the user-set schedule is absent, and the domestic client terminal device 2 made an access to the server machine 4 in order to obtain a schedule file, or for the case that a distribution request for a predetermined content was issued from the domestic client terminal device 2 based on the obtained schedule file.

In such step S13, the server machine 4 distributes the schedule file or content in response to the request from the domestic client terminal device 2 since the network is not currently congested.

Step S14 will be reached for the case that the user-set schedule is present. In such step S14, the server machine 4 distributes the schedule file or content according to the user's desired schedule since the network is not currently congested.

On the other hand, when the network was discriminated in step S12 as being currently congested, the server machine 4 collates in step S15 the current congestion states of the network and the server machine 4 itself with the member level of the user who issued the distribution request for the schedule file or content, which is followed by the process in step S16.

The member level is determined based on various factors such as the number of access by such user (access frequency), communication speed of the communication line, priority of the server machine 4 or the domestic client terminal device 2, and paid charge (classified as a special member or a general member depending on the paid amount). The member level is stored in a user management database 7 shown in FIG. 1, and the server machine 4 properly reads out a member level of the relevant user from the user management database 7 to thereby allow the collation in step S15 to proceed.

In step S16, whether a member level of the user currently issuing the distribution request for the schedule file or content is high enough or not is discriminated based on the collation result in step S15, where the process goes to step S17 for the case the member level of the user is high enough (for the case of YES), and goes to step S18 for the case the member level of the user is low (for the case of NO).

In step S17, the server machine 4 distributes the schedule file or content to the user who is given a priority over other users irrespective of the current congestion status of the network since the member level of the user is high enough.

On the contrary in step S18, the server machine 4 sends a notice for announcing impossibility in immediate distribution to the domestic client terminal device 2 of the user, since the member level of such user is low, where the notice typically appears as "Distribution of the content is not available due to network congestion. Distribution will start upon relieving the congestion. Please wait for a while.", which is followed by the process in step S19. Such notice is displayed on the television image receiver 1 via the domestic client terminal device 2 of the user. Thus the user issued the distribution request recognizes the current congestion status of the network.

Even after issuing such notice, the server machine 4 continues the research of the congestion status of the network. The distribution of the schedule file or content is enabled in step S19 according to the schedule specified on the server machine 4 side only after the congestion status of the network is relieved so as to match the member level of such user.

As has been described in the above, the entertainment system of this embodiment can regulate distribution of the schedule file or content depending on the congestion status of the network and the member level of the user. This successfully prevents congestion of the network having a limited capacity, and ensures an effective use thereof.

However, a prompt distribution of the schedule file or content irrespective of the congestion status of the network is permitted to the users having higher member levels. Such discrimination of the users having higher member levels from the general users in the distribution of the schedule file or content can ensure satisfaction of such special users having higher member levels.

Such provision of the special service to the users having higher member levels is also advantageous in that promoting the use of such system, joining to the system as a special member not as a general member, and switching from a general member to a special member.

### Managing of Downloaded Contents

The entertainment system of this embodiment manages the downloaded content with the aid of a novel system configuration as described in the next.

### Division of HDD Region

The entire storage region of the HDD 16 of the entertainment system is divided into "system region", "writable region", "readable region" and "readable/writable region" as shown in FIG. 7. Among these, the "system region" and "writable region" hatched in FIG. 7 are not accessible by the user application program and is only accessible by the system programs, such as "downloader" and "extractor", of such entertainment system.

On the contrary, the "readable region" and "readable/writable region" are accessible by any of the system programs such as "downloader" and "extractor", and the user application program.

The "system region" stores the system programs such as "downloader" and "extractor", and set data referred by the system programs. The system programs stored in the "system region" cannot be referred by the user application program as described in the above.

The "writable region", which allows write-in and read-out using a system application programs, is a data storage area dedicated for such system application programs.

The "readable region" is accessible both by the system application programs and user application program, where write-in and read-out are allowable through the system application programs and only read-out is allowable through the user application program.

The "readable/writable region" allows write-in and read-out through both of the system application programs and user application program, where data written in the "readable/writable region" is completely erased at a timing not participatable by the user application program when, for example, the domestic client terminal device 2 is re-activated. Thus the "readable/writable region" can be said as a so-called "temporary data region".

### Composition of Content

The content distributed from the server machine 4 is previously subjected to encryption and compression, to thereby have a secured style of archiving (archived content). Examples of contents distributable in an archived style include application program of game, additional data or patch data for game, shareware (trial program), interactive commercial program, and moving picture data of news, movie, and commercial.

FIG. 8 is a schematic drawing showing a constitution of such archived content. As is clear from FIG. 8, the archived content comprises "archive header", "information for decoding", "program" and "data".

Among these, information for the "archive header" is not encrypted nor compressed, and is reproducible without decoding or expansion. The "archive header" contains information indicating the information of the archived content, such that indicating that the content is that for a commercial, a movie or the like.

As is described in the above, information of the "archive header" is not encrypted nor compressed, and is reproducible without decoding or expansion, so that when the content is downloaded into the HDD 16, only the "archive header" is reproduced and displayed for the user. The user then inspects the archive header and selects contents while considering whether the archived content is necessary or not. If the user considers a certain archived content as necessary and completes predetermined procedures such as paying the charge therefor, the user will be given with a public key from the system administrator. The "information for expanding", "program" and "data" become reproducible with such public key, and the "program" and "data" are expanded and reproduced based on the "information for decoding" (together with the "archive header").

### Expanding of Archived Content

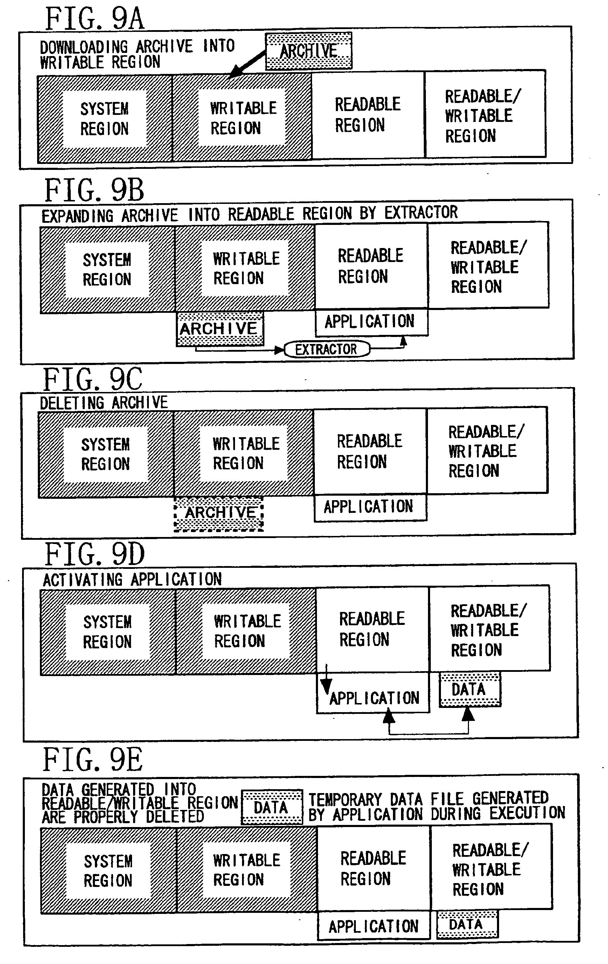

FIGs. 9A to 9E are schematic drawings showing the expanding of such archived content.

For the case of such entertainment system, an archived content is first downloaded from the server machine 4 into the HDD unit 6, and the "downloader" writes the downloaded archived content into the "writable region" of the HDD 16, as shown in FIG. 9A.

Since the archived content written in the "writable region" is not accessible by the user application program as described in the above, the user cannot use such downloaded archived content at this point of time.

The "archive header" in the archived content is, however, not encrypted or compressed, so that the "archive header" is reproducible by the user application program and can be displayed on the television image receiver 1. Thus the user can recognize only a content of the archived content downloaded into its own domestic client terminal device 2.

Next, the user selects the archived content based on the content thereof. If the user determines the archived content as unnecessary and specifies deletion of such content through operation of the controller 14, the system program will delete the archived content written in the "writable region" of the HDD 16.

On the other hand, if the user determines the archived content as necessary and completes predetermined procedures such as paying the charge therefor, the user will receive a public key from the system administrator in sealed envelop through a postal service or through transmission from the server machine 4 to the domestic client terminal device 2.

When the public key is received through a postal service, the user operates the controller 14 to enter the public key. Upon entering the public key, the "extractor" activates. Or, the "extractor" activates when the public key sent from the server machine 4 is received by the domestic client terminal device 2.

The "extractor" conducts decoding correlative to the encryption given to the "information for expanding", "program" and "data" of the archived content based on the public key, then expands and reproduces the "program" and "data" based on the decoded "information for expanding" (together with "archive header"), to thereby expand the "program" and "data", as "application", into the "readable region" of the HDD 16 as shown in FIG. 9B. The archived content in the "writable region" is deleted after the expanding as shown in FIG. 9C.

Upon completion of the expanding of "application" into the "readable region", the user application program then activates, by which the application expanded into the "readable region" is reproduced. Data generated by the user application program during such reproduction are written in the "readable/writable region" of the HDD 16 in a form of a "temporary data file" as shown in FIG. 9D.

The "temporary data file" written in the "readable/writable region" is completely deleted as shown in FIG. 9E, at a timing not participable by the user application program when, for example, the domestic client terminal device 2 is re-activated.

As has been described in the above, the entertainment system of this embodiment can distribute the content from the server machine 4 to the domestic client terminal device 2 in a predetermined form of "secured archived content", which is advantageous in that preventing a untrustworthy content possibly infected with a virus from being written in the HDD 16.

The entertainment system of this embodiment is designed so that contents are automatically downloaded into the HDD 16 irrespective of that they are to be purchased or not, and only those for which the user completed the purchasing procedure will be decoded to be available, which is advantageous in that the user can decode and use the content immediately after the completion of the purchasing procedure without requesting the downloading.

Since the content is already downloaded into the HDD 16, it is no more necessary for the user to conduct complicated operations such that accessing the server machine in order to purchase the content, and the user can install (equivalent to the foregoing decoding) the content without intentionally downloading such content.

Since the contents are downloaded into the "writable region" to which the user application program is not accessible for read-out or write-in, the contents cannot be decoded nor used unless otherwise the user completes the purchasing procedure and is given a public key from a system administrator. This successfully prevents unauthorized use (or viewing and listening) of the contents.

Among the contents downloaded into the HDD 16, those not purchased by the user are specified by the user through operating the controller 14 and deleted from the "writable region", so that undesirable accumulation of the unnecessary contents in the "writable region" of the HDD 16 is avoidable.

By such entertainment system, it may be possible that, for example, contents are downloaded into the user's domestic client terminal device 2 while the user being not aware of it such as during sleeping, and a desired content can be decoded and will become available without accessing the server machine 4. Thus the system will impress the user as a quite surprising, convenient and absolutely novel one.

### Message Digest Function Value

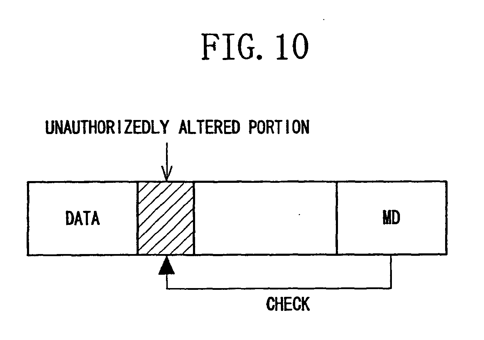

As has been described referring to FIG. 8, the archived content contains the "archive header", "information for decoding", "program" and "data", among which the "data" is added with a massage digest function value (MD) as shown in FIG. 10. Such massage digest function value is also added individually to the system programs such as "downloader" and "extractor".

When the application of the downloaded archived content is decoded into the "readable region" of the HDD 16, the "downloader" checks data string of the application using the massage digest function value in a periodic or non-periodic manner. If an unauthorizedly altered portion as shown in FIG. 10 is detected, a message such as "The application has a sign of unauthorized alteration." is displayed for the user, and the application remains unavailable until the unauthorizedly altered portion is corrected.

The system programs such as "downloader" and "extractor" check their data strings using the message digest function values added thereto in a periodic or non-periodic manner. If an unauthorizedly altered portion is detected, a message such as "The system program has a sign of unauthorized alteration." is displayed using such system programs for the user, and various operations using such system programs, such as the downloading and decoding of the archived content, are terminated until the unauthorizedly altered portion is corrected.

This successfully prevents unauthorized use of various archived contents by unauthorizedly altered program in the HDD 16. It is now also allowable to add a check-sum in place of the massage digest function value, which will result in the same effect.

### Collation of Message Digest Function Value and Public Key

The entertainment system thus can detect unauthorized alteration of the system programs or user application program using the massage digest function value, but the unauthorized alteration in, for example, the system programs cannot be detected if the massage digest function value *per se* is unauthorizedly altered.

The encrypted archived content is decoded using the public key provided from the system administrator and is decoded from the "writable region" into the "readable region" in the HDD 16, where the archived content downloaded into the "writable region" can be used unauthorizedly and unlimitedly if the public key *per se* is unauthorizedly altered.

To overcome such problems, the server machine 4 of the entertainment system is provided with a MD/public key database 8 for storing master data for the individual message digest function values (MDs) and the public key for the individual archived contents. The domestic client terminal device 2 makes connection with the server machine 4 in a periodic or non-periodic manner based on the system programs, and collates the massage digest function value and the public key currently used with those of the master data stored in the MD/public key database 8.

When a disagreement between the massage digest function value or the public key currently used and the corresponding master data thereof is detected, the application is disabled or the system operation of the device is terminated assuming that the massage digest function value or the public key is unauthorizedly altered. This successfully prevents the unauthorized use of the archived content downloaded into the "writable region" of the HDD 16 by the unauthorizedly altered massage digest function value or the public key.

### Installation from Physical Medium

While in the above description of the embodiment the archived content is downloaded by connecting the domestic client terminal device 2 to the server machine 4 via the network NW, it is also allowable to install the content from the physical medium 10 such as a CD-ROM or DVD-ROM.

The physical medium 10 in the above exemplary case contains a complete program as the archived contents, where storing only a part of the program is also allowable. The physical medium 10 is distributed to the user free of charge or at low prices.

The domestic client terminal device 2 is provided with the disk driver 11 as shown in FIG. 2. The disk driver 11 reproduces, upon being loaded with the physical medium 10, the individual archived contents recorded in such physical medium 10. The control section 9 writes, based on the "downloader", the reproduced archived contents into the "writable region" as shown in FIG. 7, which refuses the user application program to intervene. This enables the installation of the individual archived contents into the HDD 16 without connecting the domestic client terminal device 2 to the server machine 4.

For the case that the physical medium contains only a part of the program, the user who wants to purchase the complete program has to visit a shop to purchase, or to ask the system administrator to send it by post. The physical medium 10 distributed for such entertainment system originally contains the complete program, so that the user immediately use the program without visiting the shop to purchase if the public key is provided by the system administrator.

The same will apply to the case that a part of the program is distributed through the network. The user who received a part of the program through the network has to make an access to a predetermined server machine to download the complete program when the user wants to purchase it. The archived content distributed for such entertainment system is originally archived and distributed as a complete program, so that the user immediately use the complete program without complicated procedures such as accessing again to the predetermined server machine if the public key is provided by the system administrator.

For the case that a patch will be provided or data will be added to the content program already installed in the domestic client terminal device 2, such patch data or additional data may be distributed to the user in a form of being stored in the physical medium 10. Or it is also allowable to distribute such patch data or additional data from the server machine 4.

### Updating of System Programs etc.

The "downloader" and "extractor", which are system programs stored in the HDD 16 of the domestic client terminal device 2, and public key are designed to be updated in a periodic or non-periodic manner.

The updating is accomplished by up-data distributed to the user in a form of being stored in the physical medium 10 and reproduced by such user, or downloaded from the server machine 4 as one event of the downloading schedule.

The physical medium 10 storing the up-data may be such that containing only the up-data to be distributed to the user, or may be a game disk added with the up-data.

When the physical medium 10 storing the up-data is reproduced, the domestic client terminal device 2 compares a version of the system programs currently stored in the HDD 16 and a version of the up-data reproduced from the physical medium 10. If the version of the up-data reproduced from the physical medium 10 is found to be newer than that of the system programs currently stored in the HDD 16, such up-data reproduced from the physical medium 10 is written over the old "downloader", "extractor" stored in the HDD 16 or over the public keys. This successfully updates the system programs or public keys through off-line procedures.

In such entertainment system, the downloading of the up-data is included periodically or non-periodically in the downloading schedule. In the entertainment system, downloading of various contents is proceeded according to the schedule defined by the user or the server machine 4, where the up-data can be distributed as one of such downloaded contents.

When the up-data is downloaded, the domestic client terminal device 2 compares a version of the system programs currently stored in the HDD 16 and a version of the downloaded up-data. If the version of the downloaded up-data is found to be newer than that of the system programs currently stored in the HDD 16, such downloaded up-data is written over the old "downloader", "extractor" stored in the HDD 16 or over the public keys. This successfully updates the system programs or public keys while the user being not aware of it.

### Style of Use of Entertainment System

Last of all, a style of use of such entertainment system will be explained based on a specific example.

### (Distribution of Game Content)

Assume now that a role playing game (RPG) is launched from the side of the system administrator. This RPG is very popular, for which purchase by a vast number of users is prospected. Thus the server machine 4 distributes the archived content of the RPG to the domestic client terminal devices 2 of the individual users based on a schedule specified by the user or set on the server machine 4 side irrespective of intention of the purchase.

The server machine 4 now distributes the archived content depending on the congestion status of the network or the priority such as member level of the individual users, as previously explained referring to the flow chart in FIG. 6. When a plurality of users have a same priority, a priority is determined using, for example, random numbers, and based on which the archived content of the RPG is distributed in a time differential manner.

More specifically, assume that one user has specified the active downloading of the RPG through operating the domestic client terminal device 2. The "downloader" of the domestic client terminal device 2 communicates, as instructed by the user, with the server machine 4 to thereby request downloading of the RPG. Upon receiving the request, the server machine 4 refers to traffic on the network. If the traffic is determined as being congested, the RPG is distributed at dawn when the network congestion is relieved, not immediately. This ensures the distribution of the RPG based on an effective use of the limitative capacity of the network.

Now a user having a high member level can be benefited by an immediate downloading as described in the above.

The archived content of the RPG distributed to the domestic client terminal devices 2 of the individual users is written into the "writable region" of the HDD 16, which can be referred only by the system programs (FIG. 9A). The archived content is decoded into the "readable region" of the HDD 16 only by using the public key provided by the system administrator upon completion of the purchasing procedures by the user.

When the launching of a very popular game is announced, it is often seen that a lot of fans form a long line at the storefront on the day of launching, and some of them even spend several nights at the storefront before the day of launching. On the other hand, the entertainment system distributes the game content to the domestic client terminal devices 2 of the individual users irrespective of the intention of the purchase, and the decoding and use of the game are only permitted for the users completing the purchasing procedures. Thus the users can enjoy the popular game without waiting in the line at the storefront.

This is also beneficial for the system administrator since it is no more necessary to use a physical medium such as CD-ROM or DVD-ROM in order to distribute the content, which significantly save cost for the content distribution.

### (Distribution of Various Contents)

The contents distributed from the server machine 4 in the entertainment system are by no means limited to game contents. That is, the server machine 4 of this entertainment system is to distribute, for example, news content, commercial content for informing sport event or concert, information content of new movie and commercial content of new game daily (or at regular intervals) to the domestic client terminal devices 2.

Upon completion of the purchasing procedures by each user, the server machine 4 analyzes the user's taste based on the purchased contents and accumulates the processed data in a statistical database 25 shown in FIG. 1.

The server machine 4 also issues a questionnaire when the user joins to this system or in a periodic (or non-periodic) manner for searching taste of the user, analyzes the user's taste based on the answers to the questionnaire and accumulates the processed data in a statistical database 25 shown in FIG. 1.

The content to be distributed can also be specified by the user, and the server machine 4 accumulates information for indicating an identification of the contents specified by the user into the statistical database 25 shown in FIG. 1.

Thus the server machine 4 refers to the statistical database 25 for every distribution of the content to the user, to thereby ensure distribution of content well matches to the user's taste.

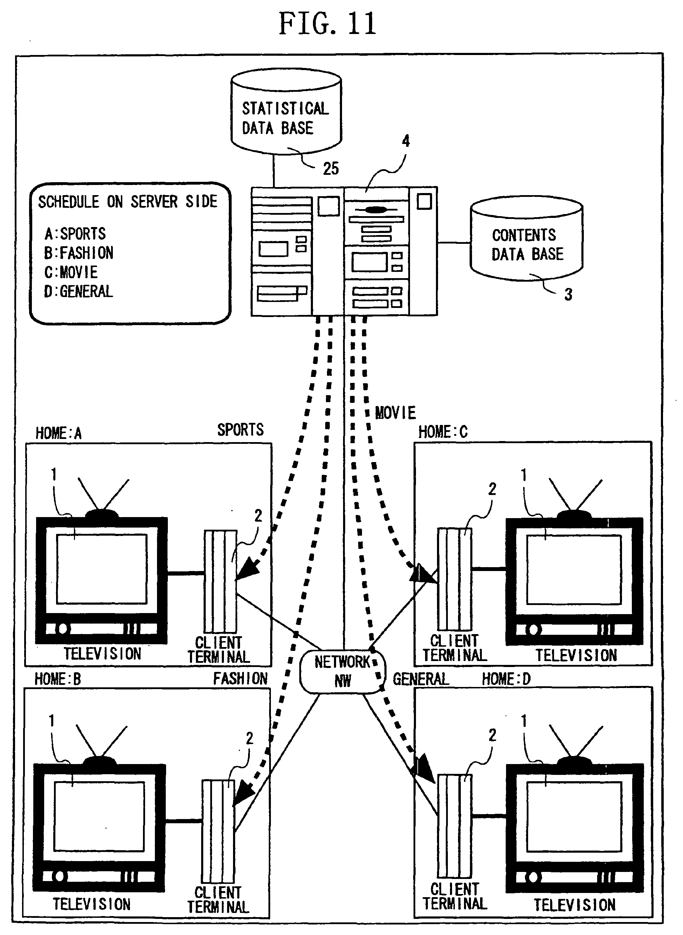

FIG. 11 is a schematic diagram showing content distribution based on the users' taste accumulated in such statistical database 25.

In FIG. 11, when the user at the user's home A completed purchasing procedures for several kinds of sport games, such purchasing history is accumulated in the statistical database 25. The server machine 4 refers to the statistical database 25 when it distributes the content to the user. Since the purchasing history of the user indicates that the user is fond of sports, the server machine 4 distributes contents arranged so as to mainly contain sport-related matters.

Similarly, when a questionnaire was issued to the user at the user' s home B and the user answered as being interested in fashion, such taste of the user at the user's home B is accumulated in the statistical database 25. The server machine 4 thus refers to the statistical database 25 and then distributes contents arranged so as to mainly contain fashion-related matters to the user at the user's home B.

Similarly, when the user at the user's home C requested the distribution of movie-related content, information indicating an identification of content requested by the user is accumulated in the statistical database 25. The server machine 4 thus refers to the statistical database 25 and then distributes contents arranged so as to mainly contain movie-related matters to the user at the user's home C.

For the case that the user at the user' s home D has no special request for contents, information corresponding to such user in the statistical database 25 remains blank or equivalent, so that the server machine 4 distributes contents covering general information on sports, movie, news and the like to the user at the user's home D.

This ensures the content distribution well matches to the users' tastes. From the users' points of view, only the contents in their own tastes (needs) can be downloaded.

While all of such contents may be charged, some contents may more preferably be free of charge. In this entertainment system, all of news content, commercial content for informing sport event or concert, information content of new movie and commercial content of new game are free of charge. Decoding of such contents does not need the public key, and the "extractor" properly decodes such contents without using the public key to thereby allow the users to enjoy the contents.

It is supposed that today's life style of the users is often such that waking up in the morning, turning the television set ON, taking a breakfast while watching or listening a television programs such as news, and going out for work. Such television programs are scheduled and edited on the convenience of television stations, and it is thus hard to say that the users truly desire them. Or rather, most of such information is even unnecessary for the users.

By constructing now such entertainment system, contents matched to the user's taste are downloaded daily (or periodically) into the user's domestic client terminal device 2 while the user is sleeping.

After such entertainment system is constructed, the life style of the user will be such that waking up in the morning, checking the contents downloaded into its own domestic client terminal device 2, and obtaining desired information at a desired time, and then going out for work.

It can thus be said that the entertainment system is most promising and is strongly awaited for the construction since it can propose a new life style for the users.

The embodiments described in the above are only part of the examples of the present invention.

### INDUSTRIAL APPLICABILITY

The present invention is applicable to processing for distributing various contents such as video games, movies, news, music and the like.

## Claims

1. An entertainment system comprising:
terminal devices (2) of individual users connected to a network (NW);
and
a server machine (4) connected via the network (NW) to the terminal devices (2) of the individual users;
wherein the server machine (4) is built in such a fashion that it distributes contents to the terminal devices (2) of the individual users according to a content distribution schedule set on every terminal device (2) of the individual users, and that it distributes said content distribution schedule to the terminal devices (2) of the individual users
**characterized in that**
the server machine (4) is built in such a fashion that it distributes the contents according to the distribution schedule and adjusts the distribution time of the contents in a time differential manner depending on the congestion status of the network (NW) and a member level of the users, when the terminal devices (2) of the individual users access the server machine.

2. The entertainment system according to Claim 1, wherein the server machine (4) is built in such a fashion that it distributes the contents according to the distribution schedule set based on distribution requests transmitted through the terminal devices (2) of the individual users.

3. The entertainment system according to Claim 1, wherein the terminal devices (2) of the individual users are built in such a fashion that they access the server machine (4) according to the content distribution schedule obtained from the server machine (4), to thereby receive the content distribution from the server machine (4).

4. The entertainment system according to Claim 1, wherein the server machine (4) is built in such a fashion that it assesses the terminal devices (2) of the individual users according to the content distribution schedule, to thereby perform content distribution.

5. The entertainment system according to any one of Claims 1 to 4, wherein the server machine (4) is built in such a fashion that it distributes contents according to distribution orders for the individual users determined based on at least congestion status of the network (NW), user's priority, or congestion status of the network and users' priority.

6. The entertainment system according to claims 1 to 5, wherein the terminal devices (2) are built in such a fashion that the content is stored to a writable region of the terminal devices of individual users.

7. A server machine (4), comprising:
a distribution schedule setting means for setting a content distribution schedule for individual users connected to a network (NW);
and
a distribution means for distributing predetermined contents via the network (NW) to terminal devices (2) of individual users according to the content distribution schedule set by the distribution schedule setting means, and for distributing said content distribution schedule to the terminal devices (2) of the individual users;
**characterized in that**
the distribution means is built in such a fashion that it distributes contents according to the distribution schedule and adjusts the distribution time of the contents in a time differential manner depending on the congestion status of the network (NW) and a member level of the users, when the terminal devices (2) of the individual users access the server machine (4).

8. The server machine (4) according to Claim 7, wherein the distribution means distributes the distribution schedule previously set by the distribution schedule setting means to the individual users, and distributes contents when receiving distribution requests from the individual users according to the distribution schedule.

9. The server machine (4) according to Claim 7, further comprising:
a communication line connecting means for connecting a communication line between the terminal devices (2) of the individual users and the server machine (4) according to the distribution schedule set by the distribution schedule setting means, and
wherein the distribution means are built in such a fashion that they distributes contents corresponding to the distribution schedule when the communication line is connected between the terminal devices (2) of the individual users and the server machine (4) by the communication line connecting means.

10. The server machine (4) according to any one of Claims 7 to 9, wherein the distribution means are built in such a fashion that they distributes contents according to distribution orders for the individual users determined based on at least congestion status of the network (NW), user's priority, or congestion status of the network and user's priority.

11. The server machine (4) according to any of claims 7 to 10, wherein the distribution means are built in such a fashion that the content is stored to a writable region of the terminal devices (2) of individual users.

12. A method for distributing contents comprising:
a step of setting a content distribution schedule on every terminal device (2) of individual users connected to a network (NW);
a step of distributing the content distribution schedule to the terminal devices (2) of the individual user;
a step of accessing a server machine (4) connected to the network (NW) by the terminal devices (2) of the individual users; and
a step of distributing predetermined contents from the server machine (4) to the terminal devices (2); wherein
the step of distributing the predetermined contents includes adjusting the distribution time of the predetermined contents in a time differential manner depending on the congestion status of the network (NW) and a member level of the users.

13. The method for distributing contents according to Claim 12 further comprising:
a step of setting the distribution schedule based on distribution requests transmitted through the terminal devices (2) of the individual users.

14. The method for distributing contents according to claims 12 or 13, further comprising:
a step of storing the content to a writable region of the terminal devices of individual users.

15. A computer-readable storage medium having recorded therein a contents distribution program to be executed on a computer, wherein the content distribution program is adapted to implement the steps of:
detecting a distribution schedule set on every terminal device (2) of individual users; and
distributing the content distribution schedule to the terminal devices (2) of the individual users; and
distributing contents to the terminal devices (2) of the individual users according to the distribution schedule when the terminal devices (2) of the individual users access a server machine (4); wherein
the distributing the contents includes adjusting the distribution time of the contents in a time differential manner depending on the congestion status of the network (NW) and a member level of the users.

16. The computer-readable storage medium having recorded therein a contents distribution program to be executed on a computer according to claim 15, wherein the content distribution program further comprises the step of:
setting the distribution schedule based on distribution requests transmitted through the terminal devices (2) of the individual users.

17. The computer-readable storage medium having recorded therein a contents distribution program to be executed on a computer according to claims 15 or 16, wherein the content distribution program further comprises the step of:
storing the content to a writable region of the terminal devices (2) of individual users.

18. A contents distributing program to be executed by a computer, being adapted to implement the steps of:
detecting a distribution schedule set on every terminal device (2) of individual users; and
distributing the content distribution schedule to the terminal devices (2) of the individual users; and
distributing contents to the terminal devices (2) of the individual users according to the distribution schedule when the terminal devices (2) of the individual users access a server machine (4); wherein
the distributing the contents includes adjusting the distribution time of the contents in a time differential manner depending on the congestion status of the network (NW) and a member level of the users.

19. A contents distributing program to be executed by a computer according to claim 18, being further adapted to implement the step of:
storing the content to a writable region of the terminal devices (2) of individual users.

## Patentansprüche

1. Unterhaltungssystem, das enthält:
Endgerätvorrichtungen (2) von einzelnen Anwendern, die mit einem Netz (NW) verbunden sind; und
eine Servermaschine (4), die über das Netz (NW) mit den Endgerätvorrichtungen (2) der einzelnen Anwender verbunden ist;
wobei die Servermaschine (4) in der Weise aufgebaut ist, dass sie gemäß einem auf jeder Endgerätvorrichtung (2) der einzelnen Anwender eingestellten Inhaltsverteilungsplan Inhalte an die Endgerätvorrichtungen (2) der einzelnen Anwender verteilt und dass sie den Inhaltsverteilungsplan an die Endgerätvorrichtungen (2) der einzelnen Anwender verteilt,
**dadurch gekennzeichnet, dass**
die Servermaschine (4) in der Weise aufgebaut ist, dass sie die Inhalte gemäß dem Verteilungsplan verteilt und die Verteilungszeit der Inhalte mit einer Zeitabstandsmethode abhängig von dem Überlastungszustand des Netzes (NW) und einer Mitgliedsstufe der Anwender anpasst, wenn die Endgerätvorrichtungen (2) der einzelnen Anwender auf die Servermaschine zugreifen.

2. Unterhaltungssystem nach Anspruch 1, wobei die Servermaschine (4) in der Weise aufgebaut ist, dass sie die Inhalte gemäß dem aufgrund einer durch die Endgerätvorrichtungen (2) der einzelnen Anwender gesendeten Verteilungsanfrage eingestellten Verteilungsplan verteilt.

3. Unterhaltungssystem nach Anspruch 1, wobei die Endgerätvorrichtungen (2) der einzelnen Anwender in der Weise aufgebaut sind, dass sie gemäß dem von der Servermaschine (4) erhaltenen Inhaltsverteilungsplan auf die Servermaschine (4) zugreifen, um dadurch die Inhaltsverteilung von der Servermaschine (4) zu empfangen.

4. Unterhaltungssystem nach Anspruch 1, wobei die Servermaschine (4) in der Weise aufgebaut ist, dass sie die Endgerätvorrichtungen (2) der einzelnen Anwender gemäß dem Inhaltsverteilungsplan bewertet, um dadurch die Inhaltsverteilung auszuführen.

5. Unterhaltungssystem nach einem der Ansprüche 1 bis 4, wobei die Servermaschine (4) in der Weise aufgebaut ist, dass sie die Inhalte gemäß Verteilungsbefehlen für die einzelnen Anwender, die mindestens aufgrund des Überlastungszustands des Netzes (NW), der Priorität des Anwenders oder des Überlastungszustands des Netzes und der Priorität des Anwenders bestimmt wurden, verteilt.

6. Unterhaltungssystem nach Anspruch 1 bis 5, wobei die Endgerätvorrichtungen (2) in der Weise aufgebaut sind, dass der Inhalt in einem beschreibbaren Bereich der Endgerätvorrichtungen der einzelnen Anwender gespeichert wird.

7. Servermaschine (4), die enthält:
Verteilungsplaneinstellungsmittel zum Einstellen eines Inhaltsverteilungsplans für die einzelnen Anwender, die mit einem Netz (NW) verbunden sind; und
Verteilungsmittel zum Verteilen von vorgegebenen Inhalten über das Netz (NW) gemäß dem durch die Verteilungsplaneinstellungsmittel eingestellten Inhaltsverteilungsplan an die Endgerätvorrichtungen (2) der einzelnen Anwender und zum Verteilen des Inhaltsverteilungsplans an die Endgerätvorrichtungen (2) der einzelnen Anwender;
**dadurch gekennzeichnet, dass**
die Verteilungsmittel in der Weise aufgebaut sind, dass sie die Inhalte gemäß dem Verteilungsplan verteilen und die Verteilungszeit der Inhalte mit einer Zeitabstandsmethode abhängig von dem Überlastungszustand des Netzes (NW) und einer Mitgliedsstufe der Anwender anpassen, wenn die Endgerätvorrichtungen (2) der einzelnen Anwender auf die Servermaschine (4) zugreifen.

8. Servermaschine (4) nach Anspruch 7, wobei die Verteilungsmittel den vorher durch die Verteilungsplaneinstellungsmittel eingestellten Verteilungsplan an die einzelnen Anwender verteilen und die Inhalte gemäß dem Verteilungsplan verteilen, wenn sie Verteilungsanfragen von den einzelnen Anwendern empfangen.

9. Servermaschine (4) nach Anspruch 7, die ferner enthält:
Kommunikationsleitungsverbindungsmittel zum Anschließen einer Kommunikationsleitung zwischen den Endgerätvorrichtungen (2) der einzelnen Anwender und der Servermaschine (4) gemäß dem durch die Verteilungsplaneinstellungsmittel eingestellten Verteilungsplan und
wobei die Verteilungsmittel in der Weise aufgebaut sind, dass sie Inhalte entsprechend dem Verteilungsplan verteilen, wenn die Kommunikationsleitung zwischen den Endgerätvorrichtungen (2) der einzelnen Anwender und der Servermaschine (4) durch die Kommunikationsleitungsverbindungsmittel angeschlossen ist.

10. Servermaschine (4) nach einem der Ansprüche 7 bis 9, wobei die Verteilungsmittel in der Weise aufgebaut sind, dass sie die Inhalte gemäß den Verteilungsbefehlen für die einzelnen Anwender, die mindestens aufgrund des Überlastungszustands des Netzes (NW), der Priorität des Anwenders oder des Überlastungszustands und der Priorität des Anwenders bestimmt wurden, verteilen.

11. Servermaschine (4) nach einem der Ansprüche 7 bis 10, wobei die Verteilungsmittel in der Weise aufgebaut sind, dass der Inhalt in einem beschreibbaren Bereich der Endgerätvorrichtungen (2) der einzelnen Anwender gespeichert wird.

12. Verfahren zum Verteilen von Inhalten, das enthält:
einen Schritt des Einstellens eines Inhaltsverteilungsplans an jeder Endgerätvorrichtung (2) der einzelnen Anwender, die mit einem Netz (NW) verbunden ist;
einen Schritt des Verteilens des Inhaltsverteilungsplans an die Endgerätvorrichtungen (2) der einzelnen Anwender;
einen Schritt des Zugreifens auf eine Servermaschine (4), die durch die Endgerätvorrichtungen (2) der einzelnen Anwender mit dem Netz (NW) verbunden ist; und
einen Schritt des Verteilens von vorgegebenen Inhalten von der Servermaschine (4) an die Endgerätvorrichtungen (2); wobei
der Schritt des Verteilens der vorgegebenen Inhalte das Anpassen der Verteilungszeit der vorgegebenen Inhalte mit einer Zeitabstandsmethode abhängig von dem Überlastungszustand des Netzes (NW) und einer Mitgliedsstufe der Anwender enthält.

13. Verfahren zum Verteilen von Inhalten nach Anspruch 12, das ferner enthält:
einen Schritt des Einstellens des Verteilungsplans aufgrund der durch die Endgerätvorrichtungen (2) der einzelnen Anwender gesendeten Verteilungsanfragen.

14. Verfahren zum Verteilen von Inhalten nach den Ansprüchen 12 oder 13, das ferner enthält:
einen Schritt des Speicherns des Inhalts in einem beschreibbaren Bereich der Endgerätvorrichtungen der einzelnen Anwender.

15. Computerlesbares Speichermedium mit einem darauf aufgezeichneten und auf einem Computer auszuführenden Inhaltsverteilungsprogramm, wobei das Inhaltsverteilungsprogramm ausgelegt ist, die folgenden Schritte umzusetzen:
Detektieren eines auf jeder Endgerätvorrichtung (2) der einzelnen Anwender eingestellten Verteilungsplans; und
Verteilen des Inhaltsverteilungsplans an die Endgerätvorrichtungen (2) der einzelnen Anwender; und
Verteilen von Inhalten an die Endgerätvorrichtungen (2) der einzelnen Anwender gemäß dem Verteilungsplan, wenn die Endgerätvorrichtungen (2) der einzelnen Anwender auf eine Servermaschine (4) zugreifen; wobei
das Verteilen der Inhalte das Anpassen der Verteilungszeit der Inhalte mit einer Zeitabstandsmethode abhängig von dem Überlastungszustand des Netzes (NW) und einer Mitgliedsstufe der Anwender enthält.

16. Computerlesbares Speichermedium mit einem darauf aufgezeichneten und von einem Computer auszuführendem Inhaltsverteilungsprogramm nach Anspruch 15, wobei das Inhaltsverteilungsprogramm ferner den Schritt enthält:
Einstellen des Verteilungsplans aufgrund der durch die Endgerätvorrichtungen (2) der einzelnen Anwender gesendeten Verteilungsanfragen.

17. Computerlesbares Speichermedium mit einem darauf aufgezeichneten und auf einem Computer auszuführendem Inhaltsverteilungsprogramm nach den Ansprüchen 15 oder 16, wobei das Inhaltsverteilungsprogramm ferner den Schritt enthält:
Speichern des Inhalts in einem beschreibbaren Bereich der Endgerätvorrichtungen (2) der einzelnen Anwender.

18. Inhaltsverteilungsprogramm, das durch einen Computer auszuführen ist und das ausgelegt ist, die folgenden Schritte umzusetzen:
Detektieren eines auf jeder Endgerätvorrichtung (2) der einzelnen Anwender eingestellten Verteilungsplans; und
Verteilen des Inhaltsverteilungsplans an die Endgerätvorrichtungen (2) der einzelnen Anwender; und
Verteilen der Inhalte gemäß dem Verteilungsplan an die Endgerätvorrichtungen (2) der einzelnen Anwender, wenn die Endgerätvorrichtungen (2) der einzelnen Anwender auf eine Servermaschine (4) zugreifen; wobei
das Verteilen der Inhalte das Anpassen der Verteilungszeit der Inhalte mit einer Zeitabstandsmethode abhängig von dem Überlastungszustand des Netzes (NW) und einer Mitgliedsstufe der Anwender enthält.

19. Inhaltsverteilungsprogramm, das durch einen Computer auszuführen ist, nach Anspruch 18, das ferner ausgelegt ist, den folgenden Schritt umzusetzen:
Speichern des Inhalts in einem beschreibbaren Bereich der Endgerätvorrichtungen (2) der einzelnen Anwender.

## Revendications

1. Système de divertissement, comprenant :
des dispositifs terminaux (2) d'utilisateurs individuels connectés à un réseau (NW) ; et
une machine serveur (4) connectée par l'intermédiaire du réseau (NW) aux dispositifs terminaux (2) des utilisateurs individuels ;
dans lequel la machine serveur (4) est conçue de telle façon qu'elle distribue des contenus aux dispositifs terminaux (2) des utilisateurs individuels selon une planification de distribution de contenus définie sur chaque dispositif terminal (2) des utilisateurs individuels, et qu'elle distribue ladite planification de distribution de contenus aux dispositifs terminaux (2) des utilisateurs individuels,
**caractérisé en ce que** :
la machine serveur (4) est conçue de telle façon qu'elle distribue les contenus selon la planification de distribution et ajuste le temps de distribution des contenus d'une manière différentielle dans le temps, selon l'état d'encombrement du réseau (NW) et un niveau d'adhésion des utilisateurs, lorsque les dispositifs terminaux (2) des utilisateurs individuels accèdent à la machine serveur.

2. Système de divertissement selon la revendication 1, dans lequel la machine serveur (4) est conçue de telle façon qu'elle distribue les contenus selon la planification de distribution définie sur la base des demandes de distribution transmises à travers les dispositifs terminaux (2) des utilisateurs individuels.

3. Système de divertissement selon la revendication 1, dans lequel les dispositifs terminaux (2) des utilisateurs individuels sont conçus de telle façon qu'ils accèdent à la machine serveur (4) selon la planification de distribution de contenus obtenue à partir de la machine serveur (4), de manière à recevoir par conséquent la distribution de contenus à partir de la machine serveur (4).

4. Système de divertissement selon la revendication 1, dans lequel la machine serveur (4) est conçue de telle manière qu'elle évalue les dispositifs terminaux (2) des utilisateurs individuels selon la planification de distribution de contenus, de manière à mettre ainsi en oeuvre la distribution de contenus.

5. Système de divertissement selon l'une quelconque des revendications 1 à 4, dans lequel la machine serveur (4) est conçue de telle façon qu'elle distribue les contenus selon des ordres de distribution pour les utilisateurs individuels déterminés, sur la base d'au moins l'état d'encombrement du réseau (NW), la priorité de l'utilisateur, ou l'état d'encombrement du réseau et la priorité de l'utilisateur.

6. Système de divertissement selon l'une quelconque des revendications 1 à 5, dans lequel les dispositifs terminaux (2) sont conçus de telle façon que le contenu est stocké dans une zone inscriptible des dispositifs terminaux des utilisateurs individuels.

7. Machine serveur (4), comprenant :
un moyen de définition de planification de distribution pour définir une planification de distribution de contenus pour les utilisateurs individuels connectés à un réseau (NW) ; et
un moyen de distribution pour distribuer des contenus prédéterminés, par l'intermédiaire du réseau (NW), à des dispositifs terminaux (2) d'utilisateurs individuels, selon la planification de distribution de contenus définie par le moyen de définition de planification de distribution, et pour distribuer ladite planification de distribution de contenus aux dispositifs terminaux (2) des utilisateurs individuels,
**caractérisée en ce que** :
le moyen de distribution est conçu de telle façon qu'il distribue les contenus selon la planification de distribution et ajuste le temps de distribution des contenus d'une manière différentielle dans le temps selon l'état d'encombrement du réseau (NW) et
un niveau d'adhésion des utilisateurs, lorsque les dispositifs terminaux (2) des utilisateurs individuels accèdent à la machine serveur (4).

8. Machine serveur (4) selon la revendication 7, dans laquelle le moyen de distribution distribue la planification de distribution précédemment définie par le moyen de définition de planification de distribution pour les utilisateurs individuels, et distribue les contenus lors de la réception de demandes de distribution en provenance des utilisateurs individuels selon la planification de distribution.

9. Machine serveur (4) selon la revendication 7, comprenant en outre :
un moyen de connexion de ligne de communication pour connecter une ligne de communication entre les dispositifs terminaux (2) des utilisateurs individuels et la machine serveur (4) selon la planification de distribution définie par le moyen de définition de planification de distribution ; et
dans lequel le moyen de distribution est conçu de telle façon qu'il distribue les contenus correspondant à la planification de distribution lorsque la ligne de communication est connectée entre les dispositifs terminaux (2) des utilisateurs individuels et la machine serveur (4) par le moyen de connexion de ligne de communication.

10. Machine serveur (4) selon l'une quelconque des revendications 7 à 9, dans laquelle le moyen de distribution est conçu de telle façon qu'il distribue les contenus selon des ordres de distribution pour les utilisateurs individuels déterminés, sur la base d'au moins l'état d'encombrement du réseau (NW), la priorité de l'utilisateur, ou l'état d'encombrement du réseau et la priorité de l'utilisateur.

11. Machine serveur (4) selon l'une quelconque des revendications 7 à 10, dans laquelle le moyen de distribution est conçu de telle façon que le contenu est stocké dans une zone inscriptible des dispositifs terminaux (2) des utilisateurs individuels.

12. Procédé de distribution de contenus, comprenant :
une étape consistant à définir une planification de distribution de contenus sur chaque dispositif terminal (2) d'utilisateurs individuels connectés à un réseau (NW) ;
une étape consistant à distribuer la planification de distribution de contenus aux dispositifs terminaux (2) des utilisateurs individuels ;
une étape consistant à accéder à une machine serveur (4) connectée au réseau (NW), par le biais des dispositifs terminaux (2) des utilisateurs individuels ; et
une étape consistant à distribuer des contenus prédéterminés, de la machine serveur (4) aux dispositifs terminaux (2) ; dans lequel
l'étape de distribution des contenus prédéterminés inclut l'ajustement du temps de distribution des contenus prédéterminés d'une manière différentielle dans le temps selon l'état d'encombrement du réseau (NW) et un niveau d'adhésion des utilisateurs.

13. Procédé de distribution de contenus selon la revendication 12, comprenant en outre :
une étape consistant à définir la planification de distribution sur la base de demandes de distribution transmises à travers les dispositifs terminaux (2) des utilisateurs individuels.

14. Procédé de distribution de contenus selon l'une quelconque des revendications 12 ou 13, comprenant en outre :
une étape consistant à stocker le contenu dans une zone inscriptible des dispositifs terminaux d'utilisateurs individuels.

15. Support de stockage lisible par ordinateur sur lequel est enregistré un programme de distribution de contenus destiné à être exécuté sur un ordinateur, dans lequel le programme de distribution de contenus est apte à mettre en oeuvre les étapes ci-dessous consistant à :
détecter une planification de distribution définie sur chaque dispositif terminal (2) d'utilisateurs individuels ; et
distribuer la planification de distribution de contenus aux dispositifs terminaux (2) des utilisateurs individuels ; et
distribuer des contenus aux dispositifs terminaux (2) des utilisateurs individuels selon la planification de distribution lorsque les dispositifs terminaux (2) des utilisateurs individuels accèdent à une machine serveur (4) ; dans lequel
la distribution des contenus comprend l'ajustement du temps de distribution des contenus d'une manière différentielle dans le temps selon l'état d'encombrement du réseau (NW) et un niveau d'adhésion des utilisateurs.

16. Support de stockage lisible par ordinateur sur lequel est enregistré un programme de distribution de contenus destiné à être exécuté sur un ordinateur selon la revendication 15, dans lequel le programme de distribution de contenus
comprend en outre l'étape ci-dessous consistant à :
définir la planification de distribution sur la base de demandes de distribution transmises à travers les dispositifs terminaux (2) des utilisateurs individuels.

17. Support de stockage lisible par ordinateur sur lequel est enregistré un programme de distribution de contenus destiné à être exécuté sur un ordinateur selon la revendication 15 ou 16, dans lequel le programme de distribution de contenus comprend en outre l'étape ci-dessous consistant à :
stocker le contenu dans une zone inscriptible des dispositifs terminaux (2) des utilisateurs individuels.

18. Programme de distribution de contenus destiné à être exécuté par un ordinateur, apte à mettre en oeuvre les étapes ci-dessous consistant à :
détecter une planification de distribution définie sur chaque dispositif terminal (2) d'utilisateurs individuels ; et
distribuer la planification de distribution de contenus aux dispositifs terminaux (2) des utilisateurs individuels ; et
distribuer des contenus aux dispositifs terminaux (2) des utilisateurs individuels selon la planification de distribution lorsque les dispositifs terminaux (2) des utilisateurs individuels accèdent à une machine serveur (4) ; dans lequel
la distribution des contenus comprend l'ajustement du temps de distribution des contenus d'une manière différentielle dans le temps selon l'état d'encombrement du réseau (NW) et un niveau d'adhésion des utilisateurs.

19. Programme de distribution de contenus destiné à être exécuté par un ordinateur selon la revendication 18, lequel est en outre apte à mettre en oeuvre l'étape ci-dessous consistant à :
stocker le contenu dans une zone inscriptible des dispositifs terminaux (2) des utilisateurs individuels.
